# EUROPEAN PATENT APPLICATION

(11) **EP 1 897 918 A1**
(43) Date of publication of application: **12.03.2008**
(21) Application number: 07114838.1
(22) Date of filing: 23.08.2007
(51) Int. Cl.: C09D 5/00, C09D 201/00, C08J 3/20, C08J 7/04, G02B 1/10

(54) **Color Tinted Clear Coating Composition and Method for Producing the Same**

(30) Priority: 05.09.2006 KR 20060085122
(71) Applicant: Samsung Electronics Co., Ltd., Suwon-si, Gyeonggi-Do (KR)
(72) Inventor: Kim, Il-Jin C/O SAMSUNG ELECTRONICS CO., LTD., Gyeonggi-do (KR); Park, Hoon-Soo C/O SAMSUNG ELECTRONICS CO., LTD, Gyeonggi-do (KR); Kang, Shin-Chul C/O SAMSUNG ELECTRONICS CO., LTD, Gyeonggi-do (KR)
(74) Representative: Grünecker, Kinkeldey, Stockmair & Schwanhäusser Anwaltssozietät

(57) **Abstract**

The present invention relates to a color tinted clear coating composition expressing a color in a semi-transparent state and a method for producing the same. The invention further relates to a window of a portable terminal and a method for producing the same.

## Description

### BACKGROUND OF THE INVENTION

### 1. Field of the Invention

The present invention relates to a color tinted clear coating composition expressing a color in a semi-transparent state and a method for producing the same. The invention further relates to a window of a portable terminal and a method for producing the same.

### 2. Description of the Related Art

Generally, a clear coating paint is used for many items, such as cosmetics containers, golf balls, telephones, and portable terminals.

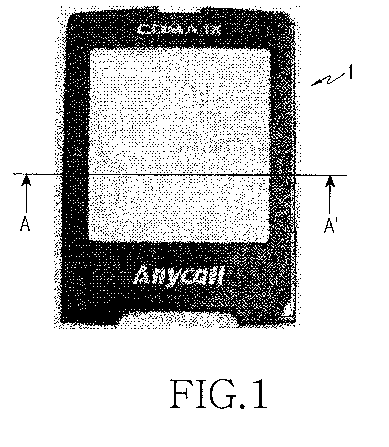

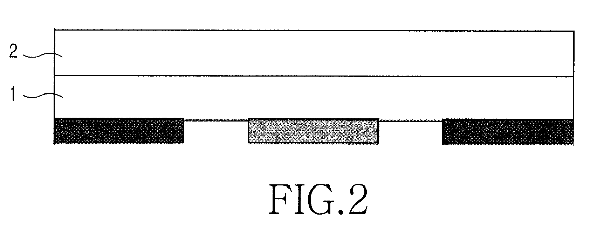

As shown in FIGs. 1 and 2, for a window 1 of the portable terminal, semi-transparent resin for each color, which is made of an acryl material, is injected to manufacture an acryl transparent injection preform and an Ultraviolet (UV) clear coating paint 2 is coated onto the surface of the manufacture transparent injection preform to form window 1.

Since the UV clear coating paint 2 is composed of only a transparent glossy clear having no quencher and an opaque flat clear having a quencher, it cannot express a color in a semi-transparent state. As a result, the UV clear coating print 2 is used to protect a base coating color while expressing gloss, and a glossy clear print can be applied onto the surface of the window 1 of the portable terminal.

The transparent injection preform 1 mainly comprises the window of the portable terminal.

However, the window of the portable terminal is typically made of an acryl material that is a synthetic resin, and a semi-transparent resin for each color is necessary to express various colors of the window, and the resin for each color must be separately injected. As a result, the amount of time required for injection increases, the resin must be replaced when another color is required, and a foreign substance or a defect such as a black spot may be generated during the replacement.

Moreover, because of being developed only for color protection, an existing clear print cannot express colors of various textures.

### SUMMARY OF THE INVENTION

It is, therefore, an object of the present invention to provide a color tinted clear coating composition and a method for producing the same, in which the color tinted clear coating composition is produced by adding a high-concentration liquid pigment (color tinting pigment) and is coated onto the transparent or semi-transparent window surface of a portable terminal to implement permeability and to provide various colors to the window, thereby improving the quality and marketability of the portable terminal.

It is another object of the present invention to provide a color tinted clear coating composition and a method for producing the same, in which the color tinted clear coating composition is produced by adding a high-concentration liquid pigment (color tinting pigment) and is coated onto the transparent or semi-transparent window surface of a portable terminal to implement various colors in the window, thereby preventing foreign substances inside the window from being shown and thus reducing a defective proportion.

It is another object of the present invention to provide a color tinted clear coating composition and a method for producing the same, in which the color tinted clear coating composition is produced by adding a high-concentration liquid pigment (color tinting pigment) and is coated onto the transparent or semi-transparent window surface of a portable terminal to implement various colors in the window, thereby substituting for a portion that has been implemented only during injection and thus reducing a development period and a cost.

It is another object of the present invention to provide a window of a portable terminal and a method for producing the same.

The present invention provides:
(1) A method for producing a color tinted clear coating composition expressing a color in a semi-transparent state, comprising the steps of:
   providing an Ultraviolet (UV) indurative clear paint;
   adding a high-concentration liquid pigment to the Ultraviolet (UV) indurative clear paint and inserting the resultant product into a mixer; and
   mixing the resultant product until a desired color is expressed.
(2) The method of (1), wherein the high-concentration liquid pigment is added at a rate of 20% or less.
(3) The method of (1) or (2), wherein the high-concentration liquid pigment is a colorant.
(4) The method of (3), wherein the colorant is composed of a semi-transparent color tinting pigment.
(5) A color tinted clear coating composition expressing a color in a semi-transparent state, obtainable by the method of any of (1) to (4).
(6) A method for producing a coated injection preform, comprising the step of:
   coating the color tinted clear coating composition of (5) onto the surface of a transparent or semi-transparent injection preform.
(7) The method of (6), wherein the injection preform is an acryl material.
(8) The method of (6) or (7), wherein the injection preform is a window of a portable terminal.
(9) A window of a portable terminal obtainable by the method of (8).

### BRIEF DESCRIPTION OF THE DRAWINGS

The above and other objects, features and advantages of the present invention will become more apparent from the following detailed description when taken in conjunction with the accompanying drawings in which:
FIG 1 illustrates a window of a portable terminal onto which a conventional UV clear coating paint is coated;
FIG. 2 is a cross-sectional view taken along a line A-A' of FIG 1;
FIG 3 illustrates a window of a portable terminal onto which a color tinted clear coating composition according to an embodiment of the present invention is coated;
FIG. 4 is a cross-sectional view taken along a line B-B' of FIG. 3; and
FIG. 5 is a flowchart illustrating a method for producing a color tinted clear coating composition according to an embodiment of the present invention.

### DETAILED DESCRIPTION OF THE PREFERRED EMBODIMENT

Hereinafter, a preferred embodiment of the present invention will be described in detail with reference to the accompanying drawings.

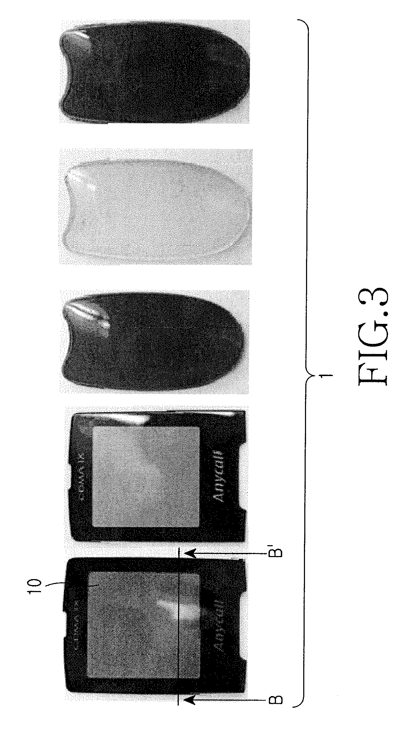

First, in a preferred method of the present invention, a high-concentration liquid pigment is added to a UV indurative clear paint at a rate of 20% or less. The resultant product is inserted into a mixer and is mixed until a desired color is expressed, thereby producing, as shown in FIG. 3, a color tinted clear coating composition 10 that expresses a color in a semi-transparent state.

The high-concentration liquid pigment is added at a rate of 20% or less. However, if the high-concentration liquid pigment is added at a rate of 20% or more, its physical properties significantly change and thus cannot meet desired reliability. As the high-concentration liquid pigment is added at a lower rate, the degree of transparency increases. Thus, if the high-concentration liquid pigment is added at a higher rate, the degree of transparency decreases.

If a dye instead of the high-concentration liquid pigment is used, it may lump. Therefore, in order to prevent lumping, the high-concentration liquid pigment should be used.

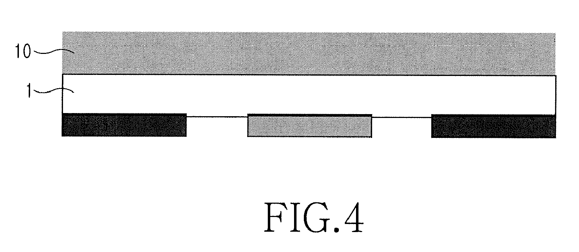

As shown in FIGs. 3 and 4, the color tinted clear coating composition 10 is coated onto the surface of the transparent or semi-transparent window 1 of the portable terminal.

The transparent window 1 is composed of an acryl material and the high-concentration liquid pigment (not shown) is composed of a colorant.

The colorant is composed of a semi-transparent color tinting pigment.

As shown in FIG. 4, a desired hardness can be obtained by coating the color tinted clear coating composition 10 onto the surface of the window 1.

Hereinafter, a method for producing a color tinted coating composition according to an embodiment of the present invention will be described in detail.

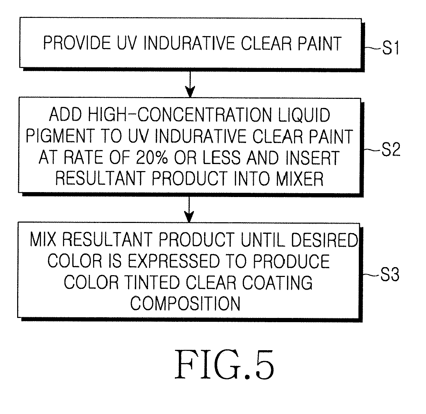

As shown in FIG. 5, a UV indurative clear paint having a pencil hardness test of 4H or more is provided in coating of the surface of the acryl-group window 1 of the portable terminal in step S1.

The high-concentration liquid pigment is added to the UV indurative clear paint at a rate of 20% or less and a resultant product is inserted into the mixer in step S2.

At this time, the high-concentration liquid pigment is added at a rate of 20% or less. If the high-concentration liquid pigment is added at a rate of 20% or more, its physical properties significantly change and thus cannot meet desired reliability. As the high-concentration liquid pigment is added at a lower rate, the degree of transparency increases. Thus, if the high-concentration liquid pigment is added at a higher rate, the degree of transparency decreases.

The high-concentration liquid pigment is preferably a colorant, which is composed of a pigment instead of a dye, since if the dye instead of the pigment is used, it may lump. Therefore, in order to prevent lumping, the pigment should be used.

The colorant is preferably made of a semi-transparent color tinting pigment.

The resultant product is mixed by the mixer until a desired color is expressed, thereby producing the color tinted clear coating composition 10 in step S3.

As described above, according to the present invention, a color tinted clear coating composition is produced by adding a high-concentration liquid pigment (color tinting pigment) and is coated onto the transparent or semi-transparent window surface of a portable terminal to implement both permeability and to provide various colors for the window, thereby improving the quality and marketability of the portable terminal.

## Claims

1. A method for producing a color tinted clear coating composition expressing a color in a semi-transparent state, comprising the steps of:
providing an Ultraviolet (UV) indurative clear paint;
adding a high-concentration liquid pigment to the Ultraviolet (UV) indurative clear paint and inserting the resultant product into a mixer; and
mixing the resultant product until a desired color is expressed.

2. The method of claim 1, wherein the high-concentration liquid pigment is added at a rate of 20% or less.

3. The method of claim 1 or 2, wherein the high-concentration liquid pigment is a colorant.

4. The method of claim 3, wherein the colorant is composed of a semi-transparent color tinting pigment.

5. A color tinted clear coating composition expressing a color in a semi-transparent state, obtainable by the method of any of claims 1 to 4.

6. A method for producing a coated injection preform, comprising the step of:
coating the color tinted clear coating composition of claim 5 onto the surface of a transparent or semi-transparent injection preform.

7. The method of claim 6, wherein the injection preform is an acryl material.

8. The method of claim 6 or 7, wherein the injection preform is a window of a portable terminal.

9. A window of a portable terminal obtainable by the method of claim 8.
